(19) **Europäisches Patentamt / European Patent Office / Office européen des brevets**

(11) **EP 2 110 785 A1**

(12) **EUROPEAN PATENT APPLICATION**

(43) Date of publication:
**21.10.2009 Bulletin 2009/43**

(51) Int Cl.:
***G06Q 40/00*** (2006.01)

(21) Application number: **09005383.6**

(22) Date of filing: **15.04.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR** | (72) Inventor: **Rowell, Mark**<br>**Enfield**<br>**London N13 4BJ (GB)** |
| (30) Priority: **18.04.2008 US 46068 P**<br>**12.09.2008 US 96448 P**<br>**10.04.2009 US 421742** | (74) Representative: **Hertz, Oliver**<br>**v. Bezold & Partner**<br>**Patentanwälte**<br>**Akademiestrasse 7**<br>**80799 München (DE)** |
| (71) Applicant: **Creditex Group, Inc.**<br>**New York, NY 10022 (US)** | |

(54) **Netting and position matching for portfolio compression**

(57) A netting method replaces a set of trades between a pair of counterparties. The method includes a selection of multiple trades (260) having equivalent terms and a determination of the net notional and net coupon. Replacement trades are created, the combined net notional and combined net coupon of which respectively equal the net notional and net coupon of the multiple trades being replaced. A position matching method is implemented for portfolio compression. An implied spread is calculated for each position of a portfolio. Positions with an implied spread outside of desired bounds are corrected. A buyer and a seller are selected, the buyer having the position with the highest implied spread value of all net long and the seller of all net short protection positions. The created trade has a notional equal to the smaller of the net default exposure and a spread of the implied spread with a smaller position.

FIG. 1

**Description**

CROSS-REFERENCE TO RELATED APPLICATIONS

This Application claims priority to US Provisional Patent Application No. 61/046,068, entitled "System and Method of Netting for Credit Default Swaps," filed on April 18, 2008, and to US Provisional Patent Application No. 61/096,448, entitled "Position Matching System and Method for Portfolio Compression," filed on September 12, 2008, the contents of which are included herein in their entirety.

FIELD OF THE INVENTION

The disclosure is generally related to netting and matching positions for portfolio compression.

BACKGROUND

The credit derivatives market continues to show strong growth in the area of credit default swaps. Credit default swaps are a form of credit derivative designed to protect creditors against non-payment of debts. A single name credit default swap is a simple and common type of credit default swap in which only one reference entity exists. The reference entity can be any borrower and is typically a widely traded company, but in some instances may be a government or other entity.

A single name credit default swap is a bilateral contract between a protection buyer and a protection seller against the default of the single reference entity. A protection buyer pays a periodic premium, also known as a credit default swap spread, to a protection seller. The periodic premium is generally paid quarterly and may be expressed in basis points per annum of the swap's notional value. The protection buyer functions as a creditor to a reference entity. If the reference entity defaults, the protection buyer stops paying premiums to the seller and the seller makes a payment to the protection buyer for the loss experienced as a result of the default of the single reference entity. The amount of the payment is typically the difference between the original price of the reference asset and the recovery value of the reference asset. Thus, the credit risk of the reference entity or obligation is transferred from the protection buyer to the protection seller.

Determining the premium and determining the payment upon default both require valuation of credit risk, which depends on the likelihood of default, actual loss, and recovery. Thus, parties to a credit default swap need to agree on (a) the identity of the reference entity or obligations; (b) the credit events that trigger default status; and (c) how and when the payments will be settled. Typical obligations may include, for example, payment, bonds, loans, borrowed money, or a combination thereof. Typical credit events may include, for example, bankruptcy, failure to pay, restructuring, obligation acceleration, obligation default, or repudiation.

Participants in the credit default swap market may include banks, securities firms, corporations, insurance companies, governments, mutual funds, pension funds, hedge funds, or the like. Protection buyers are frequently banks and protection sellers are frequently banks or insurance companies, but other entities may also be participants.

Although credit default swaps have become very popular, management of these instruments, including post-trade processing, can be cumbersome due to a frequently inadequate industry infrastructure for trading, clearing, and settlement of these bilateral contracts. When a large entity defaults, the settlement of credit derivative swap contracts can become extremely cumbersome due to the large number of investors protected through these contracts and the large number of trades with each investor.

Accordingly, the financial derivatives industry has aimed to implement procedures to facilitate settlement and clearing of credit derivatives. Clearing and settlement organizations have emerged that offer multiple solutions including collateral management and netting. Furthermore, banks and other parties have taken steps to improve back office processing to reduce paperwork backlogs. Measures have also been addressed to increase the number of available bonds for settlement when defaults occur. More drastically, some banks may be forced to cut trading in order to decrease settlement backlogs.

Another procedure implemented to facilitate settlement, known as netting, includes canceling credit-default swap trades that offset one another. The cancellation thus reduces the amount of overlapping bond and cash payments after a default. Netting may also be effective to reduce paperwork required to process trades. Netting typically occurs bilaterally between two dealers having high counterparty exposure to one another, but netting may occur multilaterally through a central counterparty.

One problem with existing netting processes is that they typically require trader intervention and thus may create additional settlement delays. Trader intervention is necessitated because existing netting services are based in part on controlling change in mark to market and risk values.

Accordingly, a solution is needed to facilitate settlement upon default in order to reduce backlog. Furthermore, a solution is needed to improve existing netting processes to reduce trader involvement to reduce the possibility for error and the delay caused by requiring trader intervention.

SUMMARY

A netting process for replacing an original set of trades between a pair of counterparties with a combination of two replacement trades includes a selection of multiple trades between the counterparties having equivalent terms and a determination of the net notional and net coupon of the multiple trades. Two replacement trades are created based upon the determined net notional and net coupon. The combined net notional and combined net coupon of the replacement trades respectively equal the net notional and net coupon of the multiple trades that are being replaced.

A position matching method for portfolio compression includes a selection of a portfolio of trade positions having one or more common terms. An implied spread for each position is calculated, and those positions with an implied spread outside of a desired lower or upper bound are corrected. A buyer and a seller are selected, where the buyer has the position with the highest implied spread value of all net long protection positions, and where the seller has the position with the highest implied spread value of all net short protection positions. A trade is created between the selected buyer and seller. The created trade has a notional equal to the smaller of the net default exposure of the buyer and seller and a spread equal to the implied spread of the party with a smaller magnitude position.

A computer system for position matching of trade positions for portfolio compression includes a database that stores portfolios of trade positions, as well as various engines that perform a position matching method for portfolio compression. The engines include computer-readable instructions for performing the operations. The instructions are stored by a memory component and executed by a processor.

A computer system for netting to replace an original set of trades between a pair of counterparties with a combination of two replacement trades includes a database that stores information related to the original set of trades, as well as various engines that perform a netting method. The engines include computer-readable instructions for performing the operations. The instructions are stored by a memory component and executed by a processor.

BRIEF DESCRIPTION OF THE DRAWINGS

The foregoing summary and the following detailed description are better understood when read in conjunction with the appended drawings. Exemplary embodiments are shown in the drawings, however, it is understood that the embodiments are not limited to the specific methods and instrumentalities depicted herein. In the drawings:

FIG. 1 is a flowchart illustrating a netting method according to an embodiment.

FIG. 2 is a block diagram illustrating a system for implementing a netting method according to an embodiment.

FIG. 3 is a flowchart illustrating a position matching method for portfolio compression according to an embodiment.

FIG. 4 is a block diagram illustrating a system for implementing a position matching method according to an embodiment.

DETAILED DESCRIPTION

A netting method serves to replace multiple existing trades with a combination of two trades. The two combined trades may have identical mark to market, identical risk, and/or identical net expected cash flows when compared to the original set of trades, for example. The netting method may be implemented by selecting a pair of counterparties and matching trades between the counterparties that have a common maturity date and/or a particular reference entity credit. The method may be implemented on all applicable trades for the selected date, credit, and counterparties.

Thus, the original trades, which may include any number of trades, such as ten trades or two hundred trades, may ultimately be collapsed into two replacement trades that match the original net notional exposure and net expected future cash flows of the original trades. These two replacement trades may then be subject to further multilateral netting, for example.

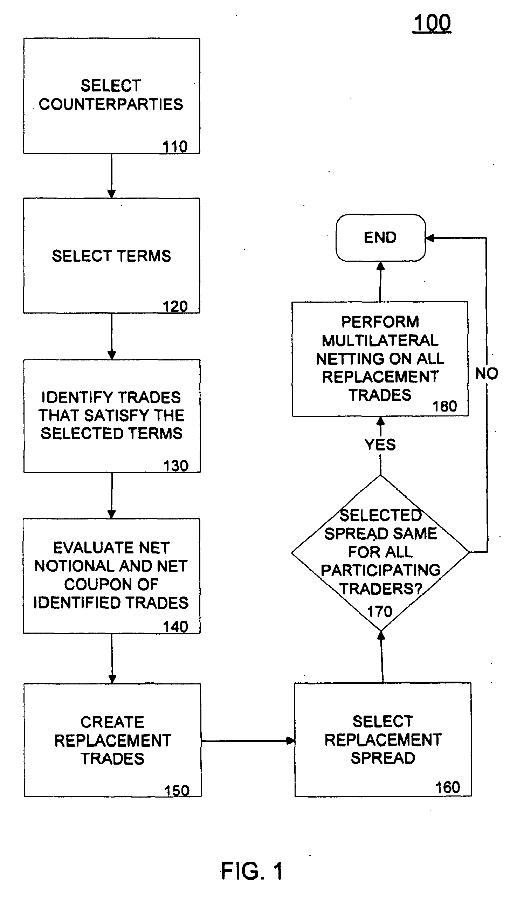

With reference to FIG. 1, a flowchart that illustrates a netting method 100 according to an embodiment is shown. At 110, a particular pair of counterparties is chosen, and at 120, selected terms are identified, such as a predetermined credit and a maturity date, for example. At 130, trades between these parties with corresponding selected terms (e.g., predetermined credit and maturity date) are identified (i.e., the "original trades"). Furthermore, other contractually binding values in addition to credit and maturity date, such as, for example, currency and restructuring language, may also be used to identify original trades.

Upon identification of the trades, the netting method 100 may include, at 140, evaluating a net notional and net coupons of the corresponding original trades. At 150, replacement trades are created based on the net notional and net coupons of the original trades. For example, two credit default swaps (CDS) may be created. In an embodiment, the two created trades may include, for example, (1) a zero coupon credit default swap to capture part of the net notional and (2) a "plain vanilla" credit default swap having a spread and a notional. These created trades may be formed such that the combined net notional and net coupons of these two created trades match those with respect to the original trades. The traditional or plain vanilla credit default swap is a payment by one party in exchange for a credit default protection payment if a credit default event on a reference asset occurs.

As an example, the original trades may have a net notional, denoted $N_{Net}$, and a net coupon, denoted $C_{Net}$. The netting method may define the zero coupon credit default swap as having a notional $N_{zero}$ and the plain vanilla credit default swap as having a spread of $s_{rep}$ and a notional of $N_{rep}$. Thus, in an embodiment, the following relationships apply:

$$N_{Net} = N_{rep} + N_{zero} \qquad (1)$$

$$C_{Net} = s_{rep} \cdot N_{rep} \qquad (2)$$

At 160, the method may further include selecting a value of the replacement spread $s_{rep}$ for the current credit and maturity so that the values of $N_{rep}$ and $N_{zero}$ satisfy equations (1) and (2) above.

Equation (2) may thus be manipulated as follows:

$$N_{rep} = C_{Net}/s_{rep} \qquad (3)$$

$$N_{zero} = N_{Net} - N_{rep} = N_{Net} - C_{Net}/s_{rep} \qquad (4)$$

Some of the original trades subjected to the netting and re-couponing may be effective in a current coupon period (e.g. the original trades were traded in the current coupon period) and thus net accrual adjustment may occur between each pair of counterparties. Thus, net accrual adjustment may be incorporated.

The replacement spread $s_{rep}$ may be selected to be the same for all participating dealers for the current credit and maturity. At 170, a determination is made to establish if $s_{rep}$ is selected to be the same for all participating dealers. Thus, once all of the replacement trades are known, the netting method, at 180, may be extended to further multilaterally net these replacement trades including both the zero coupon credit default swap and the plain vanilla credit default swap. The fact that all spreads on the replacement trades subsequently being netted are either zero (for the zero coupon credit default swap) or the same ($s_{rep}$ for the plain vanilla credit default swap) enables the multilateral netting. The multi-lateral netting may be implemented through existing index-netting techniques.

Portions of the netting method 100 may be performed by a clearinghouse organization that manages settlement of trades between multiple participating parties. As an alternative but non-limiting example, three or more counterparties may collectively manage multilateral netting.

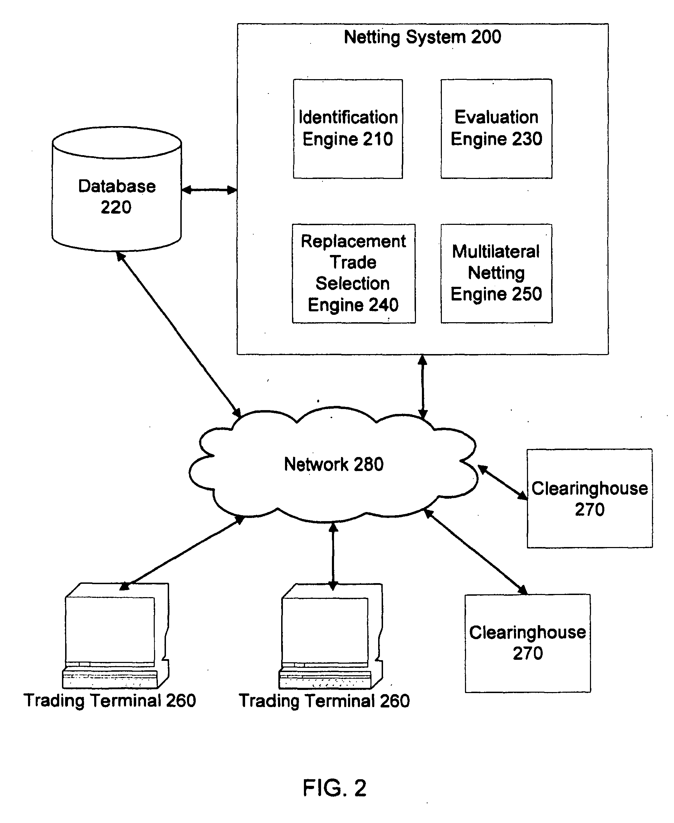

A netting system 200 may include components for performing some or all portions of the above-described netting method 100. With reference to FIG. 2, the components may include, for example, an identification engine 210 for identifying the original trades for netting. The identification engine 210 may either receive input regarding the counterparties and necessary data pertaining to credit, maturity, or other relevant variables, or the identification engine 210 may execute instructions for identifying original trades without specific input. In an embodiment, contract details are entered into the system 200 and stored in a database 220 after the counterparties enter into the contract. When settlement is required, the identification engine 210 accesses the entered data from the database 220 and accordingly manipulates (i.e. obtains) the entered data. The database 220 may be separate from or incorporated within the netting system 200.

The netting system 200 may additionally include an evaluation engine 230 for evaluating a net notional and net coupons of the identified original trades as provided by the identification engine 210. Based on the output of the evaluation engine 230, a replacement trade selection engine 240 may create replacement trades. For example, the replacement trade selection engine 240 may create two credit default swaps based on the net notional and net coupons of the original trades. The two created trades may include a zero coupon credit default swap to capture part of the net notional and a plain vanilla credit default swap having a replacement spread and a notional. The replacement trade selection engine 240 may determine these created trades such that the combined net notional and net coupons of these two created trades match those identified above with respect to the original trades. The replacement trade selection engine 240 may select a value of the replacement spread $s_{rep}$ for the current credit and maturity so that the values of $N_{rep}$ and $N_{zero}$ satisfy equations (1) and (2) above.

The system 200 may further include a multilateral netting engine 250. This engine 250 may be implemented if the replacement trade selection engine 240 selects the replacement spread $s_{rep}$ to be the same for all participating dealers for the current credit and maturity. Thus, once all of the replacement trades are known, the multilateral netting engine 250 may multilaterally net these replacement trades, including both the zero coupon credit default swap and the plain vanilla credit default swap. The multilateral netting may be implemented through existing index-netting techniques or other established techniques.

Various trading terminals 260 and clearinghouses 270 may be connected to the netting system 200 through a network 280, such as, for example, the Internet. The trading terminals 260 may provide input regarding the counterparties and necessary data pertaining to credit, maturity, or other relevant variables. The trading terminals 260 may also provide information related to the original trades for netting. Information and data from the trading terminals 260 and the clearinghouses 270 may be stored in the database 220, from which the netting system 200 may access information and data. Similarly, the netting system 200 may provide information to the trading terminals 260 and clearinghouses 270, such as, for example, information related to the replacement trades. Such information from the netting system 200 may be stored in the database 220 and/or directly provided to the intended terminals 260 and/or clearinghouses 270.

As an example of the netting method according to an embodiment, consider the information shown in Table 1, which signifies original trades taken from the point of view of one party's trades for a particular credit in one maturity with another counterparty.

Table 1

| DIRECTION | NOTIONAL (mm) | SPREAD (bp pa) |
|---|---|---|
| B | 5 | 50 |
| B | 5 | 115 |
| B | 5 | 125 |
| S | 5 | 105 |
| S | 5 | 101 |
| S | 5 | 134 |
| S | 5 | 131 |
| S | 5 | 115 |
| S | 5 | 150 |
| S | 5 | 111 |
| S | 5 | 128 |

The net notional, $N_{Net}$, is $3 \cdot 5 - 8 \cdot 5 = -25$ mm, indicating that the party is net long default risk in the amount of 25 mm. The net coupon, $C_{Net}$, is $5 \cdot (50+115+125) - 5 \cdot (105+101+134+131+115+150+111+128) = -3,425$. The net coupon having a negative value indicates that the party is receiving the coupons. Assuming a replacement spread $s_{rep}$ of 100bp pa and applying equations (3) and (4) results in:

$$N_{rep} = -3,425/100 = -34.25 \text{ mm} \qquad (3)$$

$$N_{zero} = -25\text{mm} - -34.25 = 9.25 \text{ mm} \qquad (4)$$

Thus, the two created replacement trades, according to this example, are (1) buy zero coupon CDS protection in an amount of 9.25 mm, and (2) sell plain vanilla CDS protection in an amount of 34.25 mm with a premium of 100bp pa.

A position matching method for portfolio compression serves to minimize excess gross notional. Portfolio compression refers to the netting of single name credit default swap (CDS) trades across multiple counterparties subject to keeping each counterparty's net default exposure and net annual coupon the same when compared to the original trades for each compression set. Thus, the position matching method according to an embodiment (a) keeps each counterparty's net default exposure and net annual coupon unchanged (and hence keeps mark to market and risk unchanged) and (b) provides a significant improvement in gross notional and trade count reduction.

Net default exposure for a given compression set refers to the net amount notional by which a counterparty is long or short protection and is herein denoted by the symbol $N_{Net}$. A net long protection value may be given by $N_{Net} > 0$, while a net short protection value may be given by $N_{Net} < 0$. A net annual coupon for a given compression set refers to the net annual coupon that a counterparty is paying or receiving on the trades and is herein denoted by the symbol $C_{Net}$. A net payer of premium may be denoted by $C_{Net} > 0$. The excess gross notional is the notional of trades that have to be put on to match net notional and coupon that exceeds the minimum possible gross notional defined as the sum of all the magnitude net notionals for all participating counterparties. Furthermore, a compression set may be defined as a portfolio of original trades which have one or more of the following in common: (1) reference entity; (2) currency; (3) maturity; (4) documentation language; and (5) debt tier.

According to an embodiment, it is possible to utilize only plain vanilla CDS trades to match the net default exposure and net annual coupon for each counterparty. The position matching method is based on iteratively matching counterparties who are net long protection with those who are net short protection by comparing the implied spreads of their positions. The implied spread ($s_{imp}$) is defined as the premium implied by a bank's net annual coupon and default exposure:

$$S_{imp} = \frac{C_{Net}}{N_{Net}} \qquad (5)$$

Since the implied spread is given by the ratio of the net annual coupon to the net default exposure for a counterparty, if two opposing positions with similar implied spreads are matched, after creating the trade, neither side is likely to be left with remaining positions that have implied spreads that are out of bounds (i.e. greater than a desired upper bound or lower than a desired lower bound).

For example, considering the situation identified in Table 2 for two counterparties (one net long protection, while the other net short protection), where the desired spread bounds are $s_{min} = 20bp$ and $s_{max} = 1,000bp$.

Table 2

| Counterparty | $N_{Net}$ | $C_{Net}$ | $s_{imp}$ |
|---|---|---|---|
| A | 20 mm | 106,000 | 53bp |
| B | -13 mm | -80,600 | 62bp |

According to an embodiment, it is possible to create a trade with notional 13 mm and spread 62bp between A and B, leaving A with a remaining position of $N_{Net} = 7$ mm and $C_{Net} = 25,400$, which has an implied spread of approximately 36.3bp falling inside the specified bounds. In this case, counterparty B has its remaining position completely filled by executing this trade.

In contrast, a type of position matching algorithm that matches on the largest (in magnitude) remaining net default exposure without taking into account the implied spread may encounter problems with the remaining position for either counterparty having an implied spread that is outside of the desired bound limits. Consider the situation identified in Table 3.

Table 3

| Counterparty | $N_{Net}$ | $C_{Net}$ | $s_{imp}$ |
|---|---|---|---|
| A | 20 mm | 106,000 | 53bp |
| B | -13 mm | -130,000 | 100bp |

If a trade were created between these two counterparties with the notional equal to the smaller (in magnitude) of the two positions, the trade would have a notional of 13 mm and a spread of 100bp. This would again fill B's remaining position entirely but would cause A's remaining position to have a negative implied spread of -34.3bp which would required A to be part of at least two further trades as a buyer and a seller, inconveniently leading to excess gross notional.

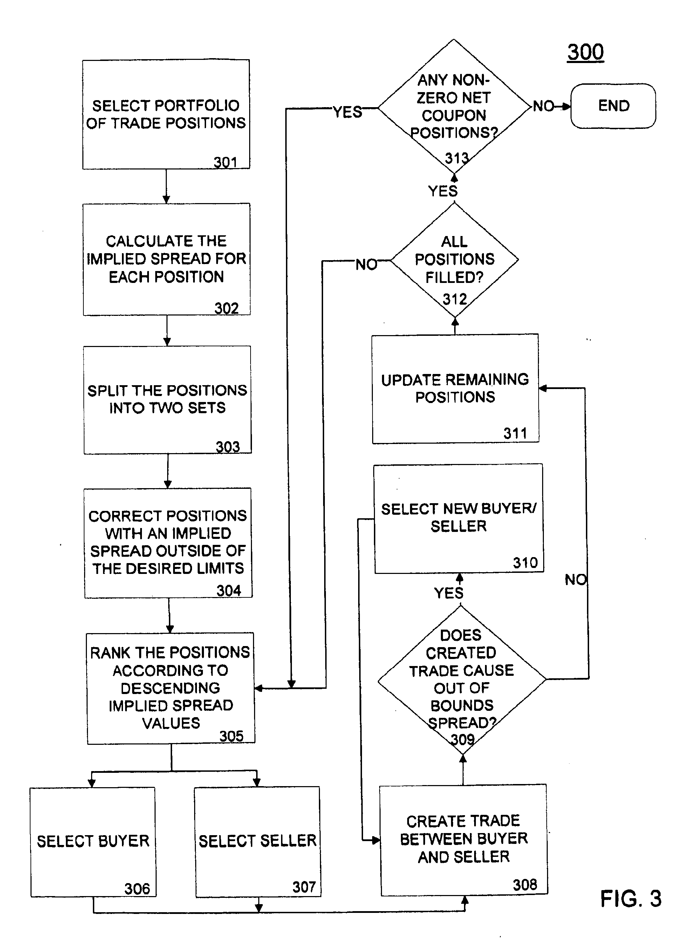

With reference to FIG. 3, a flowchart that illustrates a position matching method 300 for portfolio compression, according to an embodiment, is shown. At 301, a portfolio of trade positions with one or more common terms is selected. The terms may include, for example, a reference entity, a currency, a maturity, a documentation language, and a debt tier. Each position is defined at least by a net default exposure ($N_{Net}$) and a net coupon ($C_{Net}$). At 302, the implied spread $s_{imp}$ for each position is calculated, if not already provided. The implied spread $s_{imp}$ may be calculated according to equation (5) above, which is based on the net default exposure and net coupon.

At 303, the positions may be split into two sets, where a first set includes those positions that are net short protection and a second set includes those positions that are net long protection. In an embodiment, the positions may be split into two sets at 303 prior to the implied spread calculation at 302.

At 304, whether or not the positions are split into sets, positions that have an implied spread that falls outside of the desired bounds are corrected. For example, if a bank is currently net long protection but a net receiver of coupon (or vice versa), the implied spread will be negative and a trade with a negative spread cannot be executed. Similarly, if implied spread is either less than some desired minimum value ($s_{min}$) or greater than some desired maximum value ($s_{max}$), this may lead to excess gross notional as trades have to be booked with a direction different to the entity's net default exposure or with a spread different than their implied spread.

Following the correction of positions at 304, at 305, the positions may be ranked according to descending implied spread values for both net short protection positions and net long protection positions.

At 306 and 307, respectively, the buyer and the seller are selected. The buyer is selected as the counterparty of the position with the highest implied spread of all net long protection positions, while the seller is selected as the counterparty whose position has the highest implied spread value of all net short protection positions.

At 308, a trade between the buyer and the seller is created. The created trade has a notional equal to the smaller, in magnitude, of the net default exposure of the buyer and seller, while the spread of the trade is equal to the implied spread of the buyer or the seller with the smaller magnitude position. By performing this operation, one side or the other's remaining position is filled in its entirety.

At 309, the created trade is evaluated to determine if the created trade causes an out of bounds implied spread for the buyer or the seller. If it is established that this trade would cause the buyer's remaining position to have an out of bounds implied spread, at 310, the counterparty with the next highest implied spread in the sorted net long protection positions is selected as the buyer. Alternatively, if at 309, it is established that this trade would cause the seller's remaining position to have an out of bounds implied spread, at 310, the counterparty with the next highest implied spread in the sorted net short protection positions is selected as the seller. Then, at 308, the trade between the buyer and seller is created.

At 311, all remaining positions are updated by removing those positions that have a net default exposure of zero and a net coupon of zero.

At 312, a determination is made to establish if all positions are filled. If there are any remaining unfilled positions in net default exposure, the position matching method returns to 305 to rank the positions according to descending implied spread values for both net short protection positions and net long protection positions. Then at 306 and 307, a buyer and a seller are respectively selected. After the buyer and seller selection, again at 308, a trade is created between the buyer and the seller.

If all positions are filled, as determined at 312, then at 313 a determination is made to establish if any positions remain with non-zero net coupon (all net default exposure positions will have been filled by the previous steps in the algorithm). If the determination is positive, the method returns to 305 to rank the positions, then to 306 and 307 for the selection of a buyer and seller, respectively, and then to 308 for the creation of a trade between the two selected parties.

Returning briefly to step 304 of the position matching method 300, it is important to note that according to an embodiment, a correction of positions that have an implied spread outside of desired bounds is performed. This requires correcting trades to be created to make a counterparty's net default exposure $N_{Net}$ and net annual coupon $C_{Net}$ have an implied spread within the desired bounds $s_{min}$ and $s_{max}$.

In a first scenario, $s_{imp} < s_{min}$. In this case, a correcting trade may have a notional $N_1$ that is given by the following expression:

$$N_1 \geq \frac{s_{max} N_{Net} - C_{Net}}{s_{max} - s_{min}} \qquad (6)$$

and a spread equal to $s_{min}$. By picking $N_1$ to have a value equal to this limit, the excess gross notional is minimized. Under some circumstances, however, it may be desirable to use a value of $N_1$ that is greater than this limiting value.

In a second scenario, $s_{imp} > s_{max}$. In this case, the correcting trade may have a notional $N_1$ that is given by the following expression:

$$N_1 \geq \frac{C_{Net} - s_{min} N_{Net}}{s_{max} - s_{min}} \qquad (7)$$

with a spread equal to $s_{max}$. By selecting $N_1$ to have a value equal to this limit, the excess gross notional is minimized. Under some circumstances, however, it may be desirable to use a value of $N_1$ that is bigger than this limiting value.

In both cases, the counterparty on the other side of the correcting trade is chosen to be that party that has the largest, in magnitude terms, remaining net default exposure in the opposing direction to the counterparty whose implied spread is out of bounds.

To illustrate the position matching method and the creation of correcting trades, consider the example set forth in Table 4, which provides exemplary initial positions.

Table 4 (Initial Positions)

| Counterparty | Net Default Exposure | Net Coupon | Implied Spread |
|---|---|---|---|
| A | 17,500,000 | 11,650 | 6.7 |
| B | -7,000,000 | -67,400 | 96.3 |
| C | 13,000,000 | 82,300 | 63.3 |
| D | -16,500,000 | 28,900 | -17.5 |
| E | -7,000,000 | -55,450 | 79.2 |

Assuming the bounds are established as $s_{min}$ = 20bp and $s_{max}$ = 1,000bp, counterparties A and D have implied spreads that are outside the bounds. According to an embodiment of the position matching method, correcting trades need to be created. First dealing with counterparty A, the implied spread is less than the lower bound, and the correcting trade notional $N_1$ will accordingly be given by the limiting value of expression (6), which is $N_1$ = 17,738,265. The spread will be equal to $s_{min}$ = 20bp. The counterparty with the biggest net default exposure on the opposite side to A is D. Hence, the correcting trade has the following characteristics: Buyer = A, Seller = D, Notional = 17,738,265, and Spread = 20bp.

The remaining positions are shown in Table 5, while the trade is shown in Table 6.

Table 5 (Remaining Positions)

| Counterparty | Net Default Exposure | Net Coupon | Implied Spread | Implied Spread in Bounds? |
|---|---|---|---|---|
| A | -238,265 | -23,827 | 1,000.0 | Y |
| B | -7,000,000 | -67,400 | 96.3 | Y |
| C | 13,000,000 | 82,300 | 63.3 | Y |
| D | 1,238,265 | 64,377 | 519.9 | Y |
| E | -7,000,000 | -55,450 | 79.2 | Y |

Table 6 (Trades)

| Buyer | Seller | Notional | Coupon | Spread |
|---|---|---|---|---|
| A | D | 17,738,265 | 35,477 | 20.0 |

As shown in Tables 5 and 6, counterparty A's remaining position has changed direction but the implied spread is now within the allowed bounds. Additionally, counterparty D's position has also been corrected.

As all out of bounds implied spreads have been corrected, the position matching method proceeds by matching on implied spreads as described above with reference to FIG. 3. Accordingly, first the remaining positions are sorted in descending order according to implied spread, as shown below in Tables 7 and 8:

Table 7 (Net Buyers)

| Counterparty | Net Default Exposure | Net Coupon | Implied Spread |
|---|---|---|---|
| D | 1,238,265 | 64,377 | 519.9 |
| C | 13,000,000 | 82,300 | 63.3 |

Table 8 (Net Sellers)

| Counterparty | Net Default Exposure | Net Coupon | Implied Spread |
|---|---|---|---|
| A | 238,265 | 23,827 | 1,000.0 |
| B | 7,000,000 | 67,400 | 96.3 |
| E | 7,000,000 | 55,450 | 79.2 |

Following 306 and 307 of the position matching method, counterparties D and A are chosen and a trade is created with the following characteristics: Buyer = D, Seller = A, Notional = 238,265, and Spread equals 1,000bp. The trade notional comes from counterparty A's remaining position. Now with this trade, the remaining positions are as reflected in Table 9.

Table 9 (Remaining Positions)

| Counterparty | Net Default Exposure | Net Coupon | Implied Spread | Implied Spread in Bounds? |
|---|---|---|---|---|
| A | 0 | 0 | | |
| B | -7,000,000 | -67,400 | 96.3 | Y |
| C | 13,000,000 | 82,300 | 63.3 | Y |
| D | 1,000,000 | 40,550 | 405.5 | Y |
| E | -7,000,000 | -55,450 | 79.2 | Y |

As can be seen in Table 9, counterparty A's position has been filled completely. Again, the position matching method is repeated. In particular, the positions are again ranked in descending order according to implied spreads, a buyer and seller are selected, and a trade is created.

Counterparties D and B, as they have the highest implied spreads in opposing directions, are selected, creating a trade with the following characteristics: Buyer = D, Seller = B, Notional = 1,000,000, and Spread = 405.5bp. Now with this trade, the remaining positions are as reflected in Table 10.

Table 10 (Remaining Positions)

| Counterparty | Net Default Exposure | Net Coupon | Implied Spread | Implied Spread in Bounds? |
|---|---|---|---|---|
| A | 0 | 0 | | |
| B | -6,000,000 | -26,850 | 44.8 | Y |
| C | 13,000,000 | 82,300 | 63.3 | Y |
| D | 0 | 0 | | |
| E | -7,000,000 | -55,450 | 79.2 | Y |

As unfilled positions still remain, the positions are ranked in descending order according to implied spread to select the buyer and seller for a trade. For this particular trade, counterparties C and E are matched as their implied spreads are the highest in opposing directions, and the resulting trade has the following characteristics: Buyer = C, Seller = E, Notional = 7,000,000, and Spread = 79.2bp. The remaining positions are shown in Table 11.

Table 11 (Remaining Positions)

| Counterparty | Net Default Exposure | Net Coupon | Implied Spread | Implied Spread in Bounds? |
|---|---|---|---|---|
| A | 0 | 0 | | |
| B | -6,000,000 | -26,850 | 44.8 | Y |
| C | 6,000,000 | 26,850 | 44.8 | Y |
| D | 0 | 0 | | |
| E | 0 | 0 | | |

As unfilled positions still remain, the positions are ranked in descending order according to implied spread to select the buyer and seller for a trade. For this particular trade, counterparties B and C are matched, and the trade has the following characteristics: Buyer = C, Seller = B, Notional = 6,000,000, and Spread = 44.8bp. At this point, all positions are filled, and there are no non-zero net coupon positions remaining.

Thus, the initial net default exposures and net coupon for each of the five participating counterparties have been replicated with six trades with a total gross notional of 31.98 mm, which compares favorably to the minimum possible gross notional of the original positions of 30.5 mm. This represents an excess gross notional of approximately 1.48 mm, which is 4.8% of the theoretical minimum gross. The six, final trades are summarized in Table 12.

Table 12 (Final Trades)

| Buyer | Seller | Notional | Coupon | Spread |
|---|---|---|---|---|
| A | D | 17,738,265 | 35,477 | 20.0 |
| D | A | 238,265 | 23,827 | 1000.0 |
| D | B | 1,000,000 | 40,550 | 405.5 |
| C | E | 7,000,000 | 55,450 | 79.2 |
| C | B | 6,000,000 | 26,850 | 44.8 |

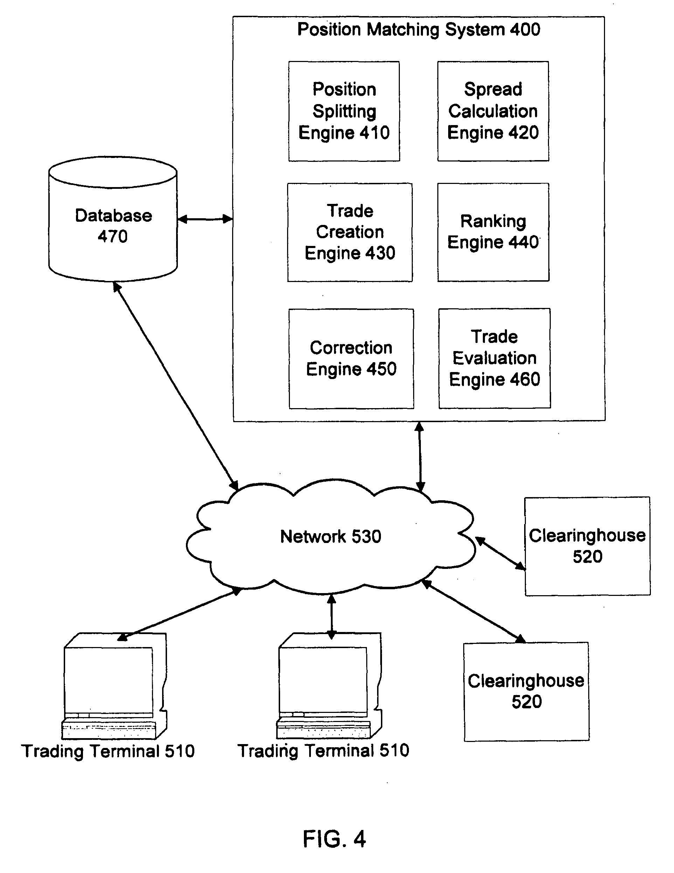

Multiple modules or engines may be utilized in order to implement the position matching method 300. For example, with reference to FIG. 4, a position matching system 400 may include a position splitting engine 410, a spread calculation engine 420, a trade creation engine 430, a ranking engine 440, a correction engine 450, and a trade evaluation engine 460. Other engines or modules may also be incorporated. Moreover, a database 470 may be separate from or incorporated within the position matching system 400 to store and provide information and data to and from the position matching system 400.

A portfolio of trade positions for position matching may be selected by, provided to, or otherwise obtained by the position matching system 400. The position matching system 400 may either receive input regarding the positions and necessary data pertaining to credit, maturity, or other relevant variables, or the position matching system may execute instructions for identifying a portfolio of trade positions without specific input. In an embodiment, contract details are entered into the system 400 and stored in a database 470 after the counterparties enter into the contract. The position matching system 400 may access the entered data from the database 470 and accordingly manipulates (i.e. obtains) the entered data for position matching, for example.

The position splitting engine 410 may operate to split the portfolio of trade positions into two sets, a first set with positions that are net short protection and a second set including positions that are net long protection. The spread calculation engine 420 may operate to calculate the implied spread $s_{imp}$ for each position according to equation (5), for example.

The correction engine 450 may determine if any positions have an implied spread that is outside of the desired spread limits $s_{min}$ and $s_{max}$. If such positions exist, the correction engine 450 corrects those positions so that the implied spread falls between the desired $s_{min}$ and $s_{max}$ values.

The ranking engine 440 ranks the positions, including those positions that have been corrected by the correction engine 450, according to descending implied spread values for both sets of positions (the net short protection positions and the net long protection positions).

The trade creation engine 430 selects a buyer and seller for a trade. The buyer is selected as the counterparty of the position with the highest implied spread of all net long protection positions, while the seller is selected as the counterparty whose position has the highest implied spread value of all net short protection positions. The trade creation engine 430 may also create the trade between the selected buyer and seller. The created trade may have a notional equal to the smaller, in magnitude, of the net default exposure of the buyer and seller, while the spread of the trade is equal to the implied spread of the buyer or the seller with the smaller magnitude position.

The trade evaluation engine 460 may function to perform several evaluation operations. First, the trade evaluation engine 460 may determine if the created trade causes an out of bounds implied spread for either the buyer or the seller. If such a spread results, the trade evaluation engine 460 may determine that a different buyer or seller is necessary for the trade. The trade evaluation engine 460 may further evaluate remaining positions to determine if all positions of the selected portfolio of positions are filled and may also determine if any positions remain with non-zero net coupon.

Various trading terminals 510 and clearinghouses 520 may be connected to the position matching system 400 through a network 530, such as, for example, the Internet. The trading terminals 510 may provide input regarding the counterparties and necessary data pertaining to credit, maturity, or other relevant variables. The trading terminals 510 may also provide information related to the positions that the system 400 operates to match. Information and data from the trading terminals 510 and the clearinghouses 520 may be stored in the database 470, from which the position matching system 400 may access information and data. Similarly, the position matching system 400 may provide information to the trading terminals 510 and clearinghouses 520, such as, for example, information related to the created trades. Such information from the position matching system 400 may be stored in the database 470 and/or directly provided to the intended terminals 510 and/or clearinghouses 520.

It is noted that the various components described herein with respect to the netting system 200 and the position matching system 400 may include a computer or multiple computers. The components may be described in the general context of comprising computer-executable instructions, such as program modules, being executed by a computer. Generally, program modules may include routines, programs, objects, components, data structures, or the like that perform particular tasks or implement particular abstract data types. An embodiment of a computer system is described below.

Those skilled in the art will appreciate that the embodiments may be practiced with various computer system configurations, including hand-held wireless devices such as mobile phones or PDAs, multiprocessor systems, microprocessor-based or programmable consumer electronics, minicomputers, mainframe computers, and the like. The embodiments may also be practiced in distributed computing environments where tasks are performed by remote processing devices that are linked through a communications network. In a distributed computing environment, program modules may be located in both local and remote computer storage media including memory storage devices.

A computer system according to our embodiment may include a general purpose computing device in the form of a computer including a processing unit, a system memory, and a system bus that couples various system components including the system memory to the processing unit.

Computers typically include a variety of computer readable media that can form part of the system memory and be read by the processing unit. By way of example, and not limitation, computer readable media may comprise computer storage media and communication media. The system memory may include computer storage media in the form of volatile and/or nonvolatile memory such as read only memory (ROM) and random access memory (RAM). A basic input/output system (BIOS), containing the basic routines that help to transfer information between elements, such as during start-up, is typically stored in ROM. RAM typically contains data and/or program modules that are immediately accessible to and/or presently being operated on by processing unit. The data or program modules may include an operating system, application programs, other program modules, and program data. The operating system may be or include a variety of operating systems such as Microsoft Windows@ operating system, the Unix operating system, the Linux operating system, the Xenix operating system, the IBM AIX™ operating system, the Hewlett Packard UX™ operating system, the Novel1 Netware™ operating system, the Sun Microsystems Solaris™ operating system, the OS/2™ operating system, the BeOS™ operating system, the Macintosh™ operating system, the Apache™ operating system, an OpenStep™ operating system, or another operating system of platform.

At a minimum, the memory includes at least one set of instructions that is either permanently or temporarily stored. The processor executes the instructions that are stored in order to process data. The set of instructions may include various instructions that perform a particular task or tasks, such as those shown in the appended flowcharts. Such a set of instructions for performing a particular task may be characterized as a program, software program, software, engine, module, component, mechanism, or tool. The system may include a plurality of software processing modules stored in a memory as described above and executed on a processor in the manner described herein. The program modules may be in the form of any suitable programming language, which is converted to machine language or object code to allow the processor or processors to read the instructions. That is, written lines of programming code or source code, in a particular programming language, may be converted to machine language using a compiler, assembler, or interpreter. The machine language may be binary coded machine instructions specific to a particular computer.

Any suitable programming language may be used in accordance with the various embodiments. Illustratively, the programming language used may include assembly language, Ada, APL, Basic, C, C++, COBOL, dBase, Forth, FORTRAN, Java, Modula-2, Pascal, Prolog, REXX, and/or JavaScript, for example but not limitation. Further, it is not necessary that a single type of instruction or programming language be utilized in conjunction with the operation of the embodiments. Rather, any number of different programming languages may be utilized as is necessary or desirable.

Also, the instructions and/or data used in the practice of the embodiments may utilize any compression or encryption technique or algorithm, as may be desired. An encryption module might be used to encrypt data. Further, files or other data may be decrypted using a suitable decryption module.

The computing environment may also include other removable/nonremovable, volatile/nonvolatile computer storage media. For example, a hard disk drive may read or write to nonremovable, nonvolatile magnetic media. A magnetic disk drive may read from or writes to a removable, nonvolatile magnetic disk, and an optical disk drive may read from or write to a removable, nonvolatile optical disk such as a CD ROM or other optical media. Other removable/ nonremovable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The storage media are typically connected to the system bus through a removable or non-removable memory interface.

The processing unit that executes commands and instructions may be a general purpose computer, but may utilize any of a wide variety of other technologies including a special purpose computer, a microcomputer, mini-computer, mainframe computer, programmed micro-processor, micro-controller, peripheral integrated circuit element, a CSIC (Customer Specific Integrated Circuit), ASIC (Application Specific Integrated Circuit), a logic circuit, a digital signal processor, a programmable logic device such as an FPGA (Field Programmable Gate Array), PLD (Programmable Logic Device), PLA (Programmable Logic Array), RFID processor, smart chip, or any other device or arrangement of devices that is capable of implementing the steps of the processes.

It should be appreciated that the processors and/or memories of the computer system need not be physically in the same location. Each of the processors and each of the memories used by the computer system may be in geographically distinct locations and be connected so as to communicate with each other in any suitable manner. Additionally, it is appreciated that each of the processor and/or memory may be composed of different physical pieces of equipment.

A user may enter commands and information into the computer through a user interface that includes input devices such as a keyboard and pointing device, commonly referred to as a mouse, trackball or touch pad. Other input devices may include a microphone, joystick, game pad, satellite dish, scanner, voice recognition device, keyboard, touch screen, toggle switch, pushbutton, or the like. These and other input devices are often connected to the processing unit through a user input interface that is coupled to the system bus, but may be connected by other interface and bus structures, such as a parallel port, game port or a universal serial bus (USB).

One or more monitors or display devices may also be connected to the system bus via an interface. In addition to display devices, computers may also include other peripheral output devices, which may be connected through an output peripheral interface. The computers implementing the embodiments may operate in a networked environment using logical connections to one or more remote computers, the remote computers typically including many or all of the elements described above.

Various networks may be implemented in accordance with embodiments, including a wired or wireless local area network (LAN) and a wide area network (WAN), wireless personal area network (PAN) and other types of networks. When used in a LAN networking environment, computers may be connected to the LAN through a network interface or adapter. When used in a WAN networking environment, computers typically include a modem or other communication mechanism. Modems may be internal or external and may be connected to the system bus via the user-input interface or other appropriate mechanism. Computers may be connected over the Internet, an Intranet, Extranet, Ethernet, or any other system that provides communications. Some suitable communications protocols may include TCPIIP, UDP, or OSI for example. For wireless communications, communications protocols may include Bluetooth, Zigbee, IrDa or other suitable protocol. Furthermore, components of the system may communicate through a combination of wired or wireless paths.

The foregoing examples are provided merely for the purpose of explanation and are in no way to be construed as limiting. While reference to various embodiments are shown, the words used herein are words of description and illustration, rather than words of limitation. Further, although reference to particular means, materials, and embodiments are shown, there is no limitation to the particulars disclosed herein. Rather, the embodiments extend to all functionally equivalent structures, methods, and uses, such as are within the scope of the appended claims.

**Claims**

1. A netting method for replacing an original set of trades between a pair of counterparties with a combination of two replacement trades by a computing system, the method comprising:

   selecting multiple trades between a pair of counterparties, the multiple trades having one or more equivalent terms;
   determining a net notional and a net coupon of the multiple trades; and
   creating two replacement trades based upon the net notional and the net coupon of the multiple trades, wherein a combined net notional and a combined net coupon of the two replacement trades respectively equal the net notional and net coupon of the multiple trades,
   said selecting, determining, and creating steps being performed via the computing system.

2. The netting method of Claim 1, wherein creating two replacement trades comprises:

   creating a first trade with a first trade coupon of zero and a first trade notional; and
   creating a second trade with a replacement spread and a second trade notional.

3. The netting method of Claim 2, wherein the replacement spread is selected such that the values of the first trade notional and the second trade notional satisfy the following equations:

$$N_{Net} = N_{rep} + N_{zero},$$

and

$$C_{Net} = s_{rep} \cdot N_{rep},$$

wherein $N_{Net}$ is the net notional of the multiple trades, $C_{Net}$ is the net coupon of the multiple trades, $N_{zero}$ is the first trade notional, $N_{rep}$ is the second trade notional, and $s_{rep}$ is the replacement spread.

4. The netting method of Claim 3, further comprising:

   determining if the replacement spread is selected to be the same for all participating dealers of trades with the equivalent terms; and
   if the replacement spread is selected to be the same, perform multilateral netting on the two replacement trades and all replacement trades with the equivalent terms.

5. The netting method of Claim 2, wherein the first trade is a zero coupon credit default swap, and wherein the second trade is a plain vanilla credit default swap.

6. The netting method of Claim 1, wherein each of the two replacement trades is a credit default swap.

7. The netting method of Claim 1, wherein the equivalent terms comprise at least one of a common reference entity credit, a common maturity date, a common currency, and a common restructuring language.

8. A position matching method for portfolio compression by a computing system, the method comprising:

   selecting a portfolio of trade positions with one or more common terms, wherein each position comprises a net default exposure, a net coupon, and an implied spread;
   correcting positions with an implied spread outside of a desired lower or upper bound;
   selecting a buyer as a counterparty whose position has the highest implied spread value of all net long protection positions;
   selecting a seller as a counterparty whose position has the highest implied spread value of all net short protection positions; and

creating a trade between the buyer and the seller, wherein a notional of the trade is equal to the smaller of the net default exposure of the buyer and the seller, and wherein a spread of the trade is equal to the implied spread of the buyer or the seller with a smaller magnitude position.

9. The position matching method of Claim 8, further comprising:

calculating the implied spread for each position, comprising dividing the net coupon by the net default exposure for each position to obtain the implied spread.

10. The position matching method of Claim 8, further comprising:

splitting the positions into two sets, wherein the first set is based on net short protection and the second set is based on net long protection.

11. The position matching method of Claim 8, further comprising:

ranking the positions in a first set or a second set by descending implied spread values in each set, wherein the first set is based on net short protection and the second set is based on net long protection.

12. The position matching method of Claim 8, further comprising:

determining if the created trade causes an out of bounds implied spread for one of the buyer or the seller; if the created trade causes an out of bounds implied spread for the buyer, selecting as the buyer the counterparty with the next highest implied spread in the sorted net long protection positions; and if the created trade causes an out of bounds implied spread for the seller, selecting as the seller the counterparty with the next highest implied spread in the sorted net short protection positions.

13. The position matching method of Claim 8, further comprising:

updating all remaining positions by removing positions with a net default exposure of zero and a net coupon of zero.

14. The position matching method of Claim 8, further comprising:

determining if unfilled positions of net default exposure remain; and if unfilled positions of net default exposure remain, creating a trade between a buyer and a seller, wherein the buyer is a counterparty whose position has the highest implied spread value of all net long protection positions, and wherein the seller is a counterparty whose position has the highest implied spread value of all net short protection positions.

15. The position matching method of Claim 8, further comprising:

determining if positions with non-zero net coupon remain; and if positions with non-zero net coupon remain, creating a trade between a buyer and a seller, wherein the buyer is a counterparty whose position has the highest implied spread value of all net long protection positions, and wherein the seller is a counterparty whose position has the highest implied spread value of all net short protection positions.

16. The position matching method of Claim 8, wherein, if the implied spread is less than the lower bound, correcting positions with an implied spread outside of the desired lower or upper bound comprises:

creating a correcting trade with a spread equal to the lower bound and a notional $N_1$, wherein

$$N_1 \geq \frac{s_{max} N_{Net} - C_{Net}}{s_{max} - s_{min}},$$

wherein $s_{max}$ is the upper bound, $s_{min}$ is the lower bound, $N_{Net}$ is the net default exposure, and $C_{Net}$ is the net coupon.

17. The position matching method of Claim 16, wherein counterparties of the correcting trade are (i) a first party whose implied spread is less than the lower bound and (ii) a second party with the largest remaining net default exposure in the opposing direction to the first party.

18. The position matching method of Claim 8, wherein, if the implied spread is greater than the upper bound, correcting positions with an implied spread outside of the desired lower or upper bound comprises:

    creating a correcting trade with a spread equal to the upper bound and a notional $N_1$, wherein

$$N_1 \geq \frac{C_{Net} - s_{min} N_{Net}}{s_{max} - s_{min}},$$

    wherein $s_{max}$ is the upper bound, $s_{min}$ is the lower bound, $N_{Net}$ is the net default exposure, and $C_{Net}$ is the net coupon.

19. The position matching method of Claim 18, wherein counterparties of the correcting trade are (i) a first party whose implied spread is greater than the upper bound and (ii) a second party with the largest remaining net default exposure in the opposing direction to the first party.

20. The position matching method of Claim 8, wherein the terms comprise at least one of a reference entity, a currency, a maturity, a documentation language, and a debt tier.

21. A computer system for position matching of trade positions for portfolio compression, the system comprising:

    a database for storing portfolios of trade positions;
    a position splitting engine coupled to the database for obtaining a selected portfolio of trade positions with one or more common terms, wherein each position comprises a net default exposure, a net coupon, and an implied spread, the position splitting engine splitting the positions into two sets, wherein the first set is based on net short protection and the second set is based on net long protection, and the position splitting engine comprising computer-readable instructions for performing the obtaining and splitting operations;
    a correction engine coupled to the position splitting engine for determining if any positions have an implied spread that is outside of a desired lower or upper bound and for correcting those positions, the correction engine comprising computer-readable instructions for performing the determining and correcting operations;
    a trade creation engine coupled to the position splitting engine and the correction engine, the trade creation engine (i) selecting a buyer as a counterparty whose position has the highest implied spread value of all net long protection positions, (ii) selecting a seller as a counterparty whose position has the highest implied spread value of all net short protection positions, and (iii) creating a trade between the buyer and the seller, wherein a notional of the trade is equal to the smaller of the net default exposure of the buyer and the seller, and wherein a spread of the trade is equal to the implied spread of the buyer or the seller with a smaller magnitude position, the trade creation engine comprising computer-readable instructions for performing the selecting and creating operations;
    a memory that stores the computer-readable instructions; and
    a processor that executes the computer-readable instructions.

22. The system of Claim 21, further comprising:

    a spread calculation engine coupled to the position splitting engine for calculating the implied spread for each position by dividing the net coupon by the net default exposure for each position to obtain the implied spread, the spread calculation engine comprising computer-readable instructions for performing the calculating operation.

23. The system of Claim 21, further comprising:

    a ranking engine coupled to the correction engine for ranking the positions, including the positions that have been corrected by the correction engine, according to descending implied spread values for both sets of positions, the ranking engine comprising computer-readable instructions for performing the ranking operation.

24. The system of Claim 21, further comprising:

a trade evaluation engine coupled to the trade creation engine for determining if the created trade causes an out of bounds implied spread for either the buyer or the seller, the trade evaluation engine comprising computer-readable instructions for performing the determining operation.

25. A computer-implemented netting system for replacing an original set of trades between a pair of counterparties with a combination of two replacement trades, the system comprising:

a database for storing information related to the original set of trades;
an identification engine coupled to the database for identifying multiple trades between a pair of counterparties, the multiple trades having one or more equivalent terms, the identification engine comprising computer-readable instructions for performing the identifying operation;
an evaluation engine coupled to the identification engine for determining a net notional and a net coupon of the multiple trades, the evaluation engine comprising computer-readable instructions for performing the determining operation;
a replacement trade selection engine coupled to the evaluation engine, the replacement trade selection engine creating two replacement trades based upon the net notional and the net coupon of the multiple trades, wherein a combined net notional and a combined net coupon of the two replacement trades respectively equal the net notional and net coupon of the multiple trades, wherein a first replacement trade has a first trade coupon of zero and a first trade notional, wherein the second replacement trade has a replacement spread and a second trade notional, the replacement trade selection engine comprising computer-readable instructions for performing the creating operation;
a memory that stores the computer-readable instructions; and
a processor that executes the computer-readable instructions.

26. The system of Claim 25, wherein the replacement trade selection engine further selects the replacement spread to be the same for all participating dealers of trades with the equivalent terms.

27. The system of Claim 26, further comprising:

a multilateral netting engine coupled to the replacement trade selection engine for performing a multilateral netting operation on the two replacement trades and replacement trades with the equivalent terms, the multilateral netting engine comprising computer-readable instructions for performing the multilateral netting operation.

28. The system of Claim 25, wherein the equivalent terms comprise at least one of a common reference entity credit, a common maturity date, a common currency, and a common restructuring language.

<u>100</u>

FIG. 1

Netting System 200

Identification
Engine 210

Evaluation
Engine 230

Replacement
Trade
Selection
Engine 240

Multilateral
Netting
Engine 250

Database
220

Network 280

Clearinghouse
270

Clearinghouse
270

Trading Terminal 260

Trading Terminal 260

FIG. 2

FIG. 3

## Position Matching System 400

| | |
|---|---|
| Position Splitting Engine 410 | Spread Calculation Engine 420 |
| Trade Creation Engine 430 | Ranking Engine 440 |
| Correction Engine 450 | Trade Evaluation Engine 460 |

Database 470

Network 530

Clearinghouse 520

Clearinghouse 520

Trading Terminal 510

Trading Terminal 510

FIG. 4

Europäisches
Patentamt
European
Patent Office
Office européen
des brevets

**EUROPEAN SEARCH REPORT**

Application Number

EP 09 00 5383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The technical aspects identified in the present application are considered part of the common general knowledge. Due to their notoriety no documentary evidence is found to be required. For further details see the accompanying Opinion and the reference below. XP002456252 * abstract * ----- | 1-28 | INV. G06Q40/00 |

TECHNICAL FIELDS
SEARCHED (IPC)

G06Q

The present search report has been drawn up for all claims

| Place of search | Date of completion of the search | Examiner |
|---|---|---|
| Munich | 3 June 2009 | Pastore, Edoardo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61046068 B

- US 61096448 B